# EUROPEAN PATENT APPLICATION

(11) **EP 3 203 406 A1**
(43) Date of publication of application: **09.08.2017**
(21) Application number: 15857551.4
(22) Date of filing: 11.06.2015
(51) Int. Cl.: G06F 21/56

(54) **SENSITIVE INFORMATION SECURITY PROTECTION METHOD AND DEVICE**

(30) Priority: 05.11.2014 CN 201410618086
(71) Applicant: ZTE Corporation, Shenzhen, Guangdong 518057 (CN)
(72) Inventor: DONG, Zhenjiang, Shenzhen Guangdong 518057 (CN); WANG, Wei, Shenzhen Guangdong 518057 (CN)
(74) Representative: Regimbeau
(86) International application number: PCT/CN2015/081277
(87) International publication number: WO 2016/070623

(57) **Abstract**

A sensitive information security protection method is provided. The method includes: monitoring whether there exists a process of a target application in processes (S10); when it is monitored that there exists the process of the target application in the processes, injecting a preset dynamic link library into the process of the target application (S20); executing the dynamic link library in the process of the target application to encapsulate and load a preset functional data packet (S30); and running the functional data packet to disguise sensitive information to be accessed by the target application to form disguised data for being acquired by the target application (S40). A sensitive information security protection apparatus is also provided. By employing the above solutions, accurate sensitive information in user terminal equipment can be prevented from being acquired by a malicious application, so that no sensitive information of the user is leaked.

## Description

### TECHNICAL FIELD

The present disclosure relates to the field of information security, and particularly to a sensitive information security protection method and apparatus.

### BACKGROUND

Usage extent and usage rate of a smart terminal are steadily improved. With gradually strong computing power, transmitting-receiving capability and communication capability of a mobile platform, more and more applications are developed and installed on the smart terminal by a user. However, with the rapid development of the smart terminal, occurrence rate of malicious applications on the smart terminal and malicious behaviors in the applications are also getting higher and higher.

Many existing similar related researches, including an Android application sandbox, describe behaviors in the applications based on a traditional system call analysis method. However, after a series of explorations, it is found that these traditional methods based on system call analysis could not obtain a core interaction procedure between the application and an Android system. For example, a TaintDroid technology marks a sensitive identifier for all sensitive information and information, it will be blocked when such marked information is to be acquired or sent to a server, thereby protecting such marked information resources from being leaked. However, the TaintDroid technology cannot find out some undesirable behaviors in the applications, such as secretly sending short messages, and cannot check internal logics of the sensitive behaviors. Meanwhile, in view of problems regarding inter-process communication, many researchers monitor and record the behaviors in the applications by monitoring process communication of the applications without considering the isolation of the level of an application interface. Therefore, the behaviors for contacting the sensitive data and the sensitive resources, of the applications cannot be really blocked and prevented.

The foregoing is merely used for assisting in the understanding of the technical solution of the present disclosure and does not necessarily represent an admission that the foregoing is the prior art.

### SUMMARY

Embodiments of the present disclosure mainly aim to provide a sensitive information security protection method and apparatus, which are intended to prevent a malicious application from acquiring and leaking sensitive information in a smart terminal and realize the protection of the sensitive information of a user of the smart terminal.

In order to achieve the above objective, an embodiment of the present disclosure provides a sensitive information security protection method, including the following steps:
monitoring whether there exists a process of a target application in processes;
injecting a preset dynamic link library into the process of the target application when it is monitored that there exists the process of the target application in the processes;
executing the dynamic link library in the process of the target application to encapsulate and load a preset functional data packet; and
running the functional data packet to disguise sensitive information to be accessed by the target application so as to generate disguised data to be acquired by the target application.

In the embodiment of the present disclosure, before monitoring whether there exists the process under the target application, the method further includes: acquiring a control permission on a started target application so as to monitor the target application.

In the embodiment of the present disclosure, the step of injecting a preset dynamic link library into the process of the application when it is monitored that there exists the process under the target application, includes:
acquiring the preset dynamic link library when there exists the process under the target application; and
loading the dynamic link library into the process of the target application so that a function in the dynamic link library is executed by the process of the target application.

In the embodiment of the present disclosure, the step of running the functional data packet to disguise sensitive information to be accessed by the target application so as to generate disguised data includes:
running the functional data packet by executing the function in the dynamic link library through the process of the target application to monitor a data access request of the target application; and
performing corresponding disguising according to a type of the sensitive information to generate disguised data when data to be accessed by the data access request of the target application is preset sensitive information.

In the embodiment of the present disclosure, the sensitive information security protection method further includes:
resetting a user identity of the target application in a procedure of starting the target application; and
backuping a file system path of the target application to a preset isolation region through the reset user identity to protect data of the target application.

An embodiment of the present disclosure further provides a sensitive information security protection apparatus, including:
a monitoring module, arranged to monitor whether there exists a process of a target application in processes;
an injection module, arranged to inject a preset dynamic link library into the process of the target application when it is monitored that there exists the process of the target application in the processes;
an encapsulating and loading module, arranged to execute the dynamic link library in the process of the target application to encapsulate and load a preset functional data packet; and
a disguising module, arranged to run the functional data packet to disguise sensitive information to be accessed by the target application, so as to generate disguised data to be acquired by the target application.

In the embodiment of the present disclosure, the sensitive information security protection apparatus further includes:
a permission acquisition module, arranged to acquire a control permission on a started target application so as to monitor the target application.

In the embodiment of the present disclosure, the injection module includes:
an acquisition unit, arranged to acquire the preset dynamic link library when there exists the process under the target application; and
a loading unit, arranged to load the dynamic link library into the process of the target application so that a function in the dynamic link library is executed by the process of the target application.

In the embodiment of the present disclosure, the disguising module includes:
a monitoring unit, arranged to run the functional data packet by executing the function in the dynamic link library through the process of the target application, so as to monitor a data access request of the target application; and
a disguising process unit, arranged to, when data to be accessed by the data access request of the target application is preset sensitive information, perform corresponding disguising process according to a type of the sensitive information to generate disguised data.

In the embodiment of the present disclosure, the sensitive information security protection apparatus further includes:
a resetting module, arranged to reset a user identity of the target application in a procedure of starting the target application; and
a backup module, arranged to backup a file system path of the target application to a preset isolation region through the reset user identity to protect data of the target application.

The embodiment of the present disclosure mainly adopts a core concept of data disguising to disguise related sensitive information required to be acquired by the application. On the one hand, such a disguising strategy makes the application obtain a wrong data or obtain no data, and on the other hand, it is guaranteed that such a disguising strategy cannot be easily anti-monitored by the application, and therefore, accurate sensitive information can be effectively prevented from being acquired by a malicious application.

### BRIEF DESCRIPTION OF DRAWINGS

FIG. 1 is a schematic flow diagram of a first embodiment of a sensitive information security protection method of the present disclosure;
FIG. 2 is a schematic flow diagram of a second embodiment of a sensitive information security protection method of the present disclosure;
FIG. 3 is a schematic flow diagram of a third embodiment of a sensitive information security protection method of the present disclosure;
FIG. 4 is a schematic flow diagram of process injection of the sensitive information security protection method of the present disclosure;
FIG. 5 is a schematic flow diagram of sensitive information disguising of the sensitive information security protection method of the present disclosure;
FIG. 6 is a diagram showing an example of accessing sensitive information resources by an application in an Android system;
FIG. 7 is a diagram showing an example of accessing sensitive information resources by a target application in an Android system according to the present disclosure;
FIG. 8 is a schematic diagram showing functional modules of a first embodiment of a sensitive information security protection apparatus of the present disclosure;
FIG. 9 is a schematic diagram showing functional modules of a second embodiment of a sensitive information security protection apparatus of the present disclosure;
FIG. 10 is a schematic diagram showing functional modules of a third embodiment of a sensitive information security protection apparatus of the present disclosure;
FIG. 11 is a schematic diagram showing an injection module of the sensitive information security protection apparatus according to an embodiment of the present disclosure; and
FIG. 12 is a schematic diagram showing a disguising module of the sensitive information security protection apparatus according to an embodiment of the present disclosure.

Implementations of the object, function characteristics and advantages of the present disclosure will be further described with reference to the accompanying drawings.

### DETAILED DESCRIPTION

It should be understood that specific embodiments described herein are merely illustrative of the present disclosure and are not intended to limit the present disclosure.

A core concept of embodiments of the present disclosure is to perform data disguising on sensitive information. That is, when an application tries to open these sensitive information resources, the data disguising is performed on the sensitive information by the disclosure, so that disguised data is provided to the application, for example, opening a null file or providing wrong data and non-relevant data directly. Therefore, the application cannot obtain correct sensitive information when accessing the sensitive information.

Specifically, by way of an example, when an application requires to acquire information about a location where a device is located, returned by the embodiment of the present disclosure is a coordinate that appears to be cate a location, rather than a true coordinate where the device is located, and is completely irrelevant location coordinate. When an application wants to acquire information data of the device, such as a mobile phone number and a device ID, a preset fake mobile phone number and a preset fake device ID formed by a random combination of numbers and letters are returned by the present disclosure. Such disguised data appears to be almost identical to a real data in format, and the application cannot explore a data disguising strategy of the present disclosure. When the application tries to read address book contact information or message records, a content provider database in the system is modified by the present disclosure, so that the data returned by the query of the application is null.

The core concept of the present disclosure is applicable to any operating system in the smart terminal, and the embodiments of the present disclosure are specifically exemplified with an Android operating system.

Hereinafter, steps of specific implementation methods of the present disclosure will be described with reference to the accompanying drawings.

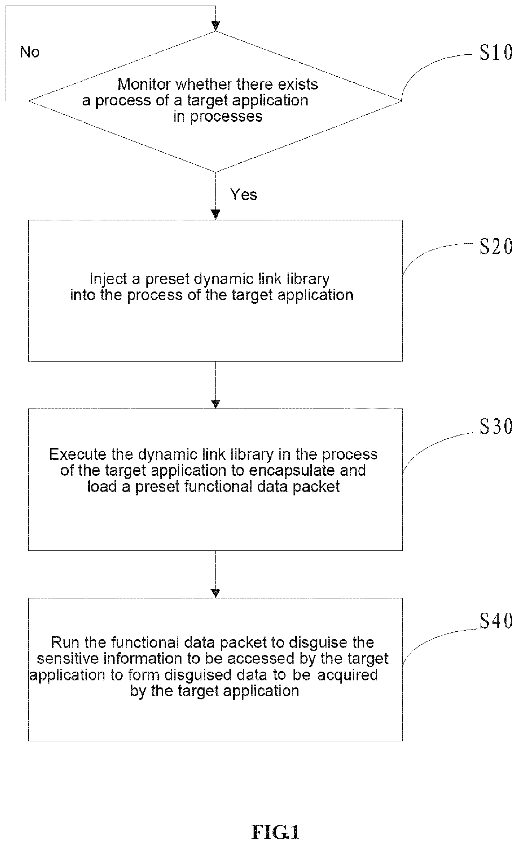

With reference to FIG. 1, FIG. 1 is a schematic flow diagram of a first embodiment of a sensitive information security protection method of the present disclosure. In the present embodiment, the sensitive information security protection method includes the following steps.

In S10, it is monitored whether there exists a process of a target application in processes.

It is determined whether there exists the process of the target application by monitoring the processes. If there does not exist the process of the target application, the method returns to S10 to keep monitoring. Otherwise, the method proceeds to S20.

When it is monitored that there exists the process of the target application in the processes, in S20, a preset dynamic link library is injected into the process of the target application.

Specifically, in the step, the preset dynamic link library is loaded into a running target process space, so that a function in the dynamic link library has a corresponding address in the target process space and the function in the dynamic link library may be called in the target process by the address later. In the present disclosure, the target application is subjected to a process injection and sensitive information disguising process according to an application selected by the user.

When it is monitored in S10 that there exists the process of the target application in the processes, a Ptrace function is called in S20 to inject the preset dynamic link library into the process of the target application. Since it is impossible to inject a larger data packet directly into the process, the Ptrace function is required to firstly inject a small segment of code for calling a dlopen function into the process of the target application, and then call the dlopen function to load the dynamic link library, so that the preset dynamic link library is injected into the process of the target application.

The Ptrace function is a very powerful Android system function. In the Android system, a new process is generated by a parent process. The Ptrace function enables the parent process to monitor and control other processes, and can also change registers and kernel images in a child process, thereby achieving breakpoint debugging of the process and tracking system call. The Ptrace function can also be used to intercept and modify system calls at a user layer. The dlopen function is also one of Android system functions, it is mainly used to load and open the dynamic link library, and return a handle to the call process. The dynamic link library is a library including codes and data that can be used by multiple programs simultaneously, and the dynamic link library is not an executable file. Accordingly, the dynamic link library provides a method of enabling the process to call a function that does not belong to executable code of the process. The executable code of the function is located in a dynamic link library file, which is a non-executable binary program file, and allows programs to share the code and other resources necessary to perform special tasks.

In S30, the dynamic link library in the process of the target application is executed to encapsulate and load a preset functional data packet.

The dynamic link library has been injected into the process of the target application in S20, thus the function in the dynamic link library may be executed by the process of the target application. The Ptrace calls a static method in the dynamic link library to encapsulate a function method in the functional data packet, and then loads the preset functional data packet to disguise the sensitive information.

In S40, the functional data packet is run to disguise the sensitive information to be accessed by the target application, so as to form disguised data to be acquired by the target application.

The functional data packet has been loaded into the process of the target application in S30, thus the process of the target application can also execute the function method in the functional data packet. The functional data packet intercepts an access request of the target application and confirms the intention thereof firstly, that is, determines whether the target application wants to access preset sensitive information. When the access request of the target application is to access the preset sensitive information, the functional data packet will perform corresponding disguising on the sensitive information according to a type of the sensitive information to be accessed by the target application to form disguised data, and return the disguised data in response to the access request of the target application.

In the present embodiment, by dynamically monitoring whether there exists the process of the target application in the processes, the functional data packet is injected into the process of the target application through loading at the first time before the target application sends the access request, so that the target application is prevented from accessing the sensitive information. The monitoring procedure begins when the application is started, and ends when the application is closed and exited. When it is monitored that there exists the process of the target application in the processes, the system function (Ptrace function) is called to inject the preset dynamic link library into the process of the target application. Therefore, the process of the target application can execute the dynamic link library, and the preset functional data packet is encapsulated and loaded by executing the dynamic link library in the process of the target application. The functional data packet is run to disguise the sensitive information to be accessed by the target application, so as to form the disguised data to be acquired by the target application. Therefore, the target application cannot acquire the correct sensitive information data, so that the purpose of protecting the security of the sensitive information of the user is achieved.

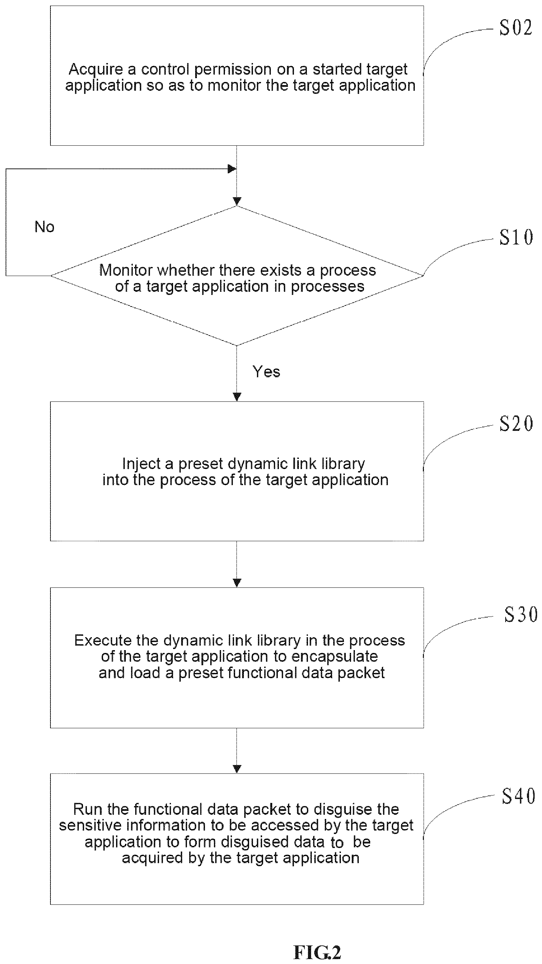

Further, with reference to FIG. 2, and FIG. 2 is a schematic flow diagram of a second embodiment of a sensitive information security protection method of the present disclosure. Based on the first embodiment of the above sensitive information security protection method of the present disclosure, before S10, the sensitive information security protection method of the present embodiment further includes the following step.

In S02, a control permission on a started target application is acquired so as to monitor the target application.

In the Android system, each application is assigned a user identity when being started, and the user identity is used to manage a permission on the application. If the applications are required to be mutually called, they should have the same user identity, each application cannot be free to get data of other applications. In S02, when the application is started and assigned the user identity in the Android system, the Ptrace function is called to intercept and reset the user identity of the application so as to acquire the control permission on the application and realize dynamic monitoring of the process of the target application through the control permission.

In the present embodiment, the control permission on the target application is acquired by modifying the user identity of the target application firstly, and then the target application can be dynamically monitored. As a result, it can be guaranteed that the target application will not access the sensitive information in the case that the target application is not monitored and a sensitive information protection measure is not implemented, so that the target application is dynamically prevented from acquiring the sensitive information in real time.

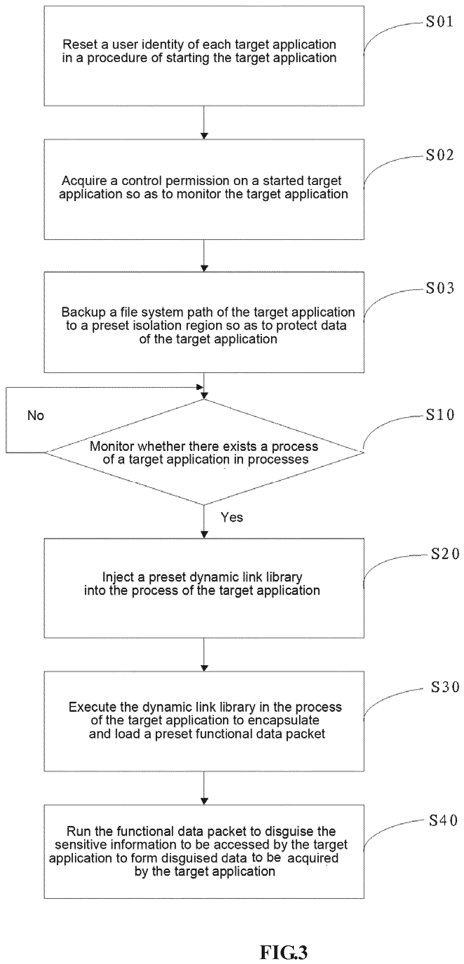

Alternatively, with reference to FIG. 3, and FIG. 3 is a schematic flow diagram of a third embodiment of a sensitive information security protection method of the present disclosure. Based on the above second embodiment of the sensitive information security protection method of the present disclosure, the sensitive information security protection method of the present embodiment further includes the following steps.

In S01, in a procedure of starting the target application, a user identity of the target application is reset.

Through resetting the user identity assigned to the target application by a system, the purpose of acquiring the control permission on the target application is achieved.

In step S03, a file system path of the target application is backuped to a preset isolation region so as to protect data of the target application.

The file system path of the target application is copied into the isolation region under the present disclosure, so that other applications cannot access and modify the data of the target application so as to protect the security of the data of the target application.

In the present embodiment, when the target application selected by the user is started, in S01, the Ptrace function may be called to track a startup procedure of the target application and reset the user identity assigned, by the system, to the target application, so as to acquire the control permission on the target application. Meanwhile, in the present embodiment, if the data of the target application is regarded as the sensitive information, that is, the target application is regarded as a protected object, data information of the target application is also required to be protected when other applications want to access the target application. That is to say, the present disclosure can also be used to protect the data of the target application from being accessed by other applications by acquiring the control permission on the target application. In S03, the file system path of the target application is copied into the isolation region under the present disclosure, so that other applications cannot access and modify the data of the target application so as to protect the security of the data of the target application.

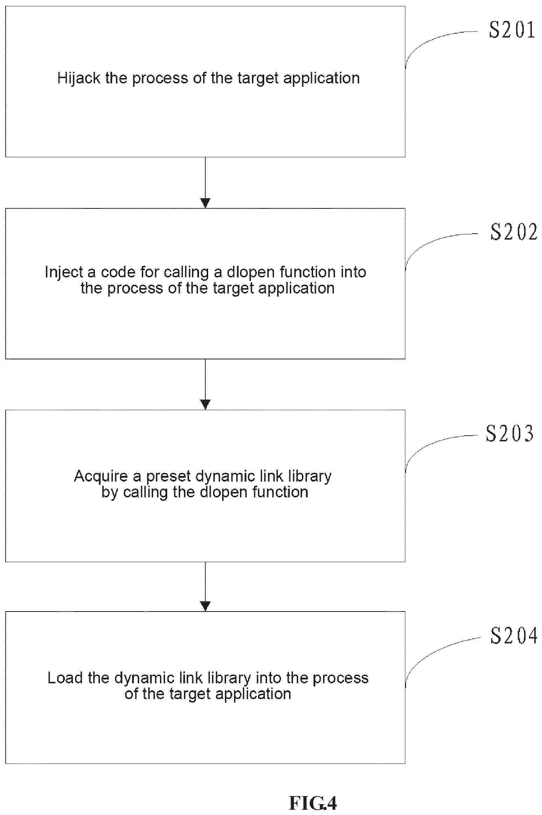

Alternatively, with reference to FIG. 4, and FIG. 4 is a schematic flow diagram showing the process injection of the sensitive information security protection method of the present disclosure.

As shown in S20 of FIG. 3, when it is monitored that there exists the process under the target application, the preset dynamic link library is injected into the process of the application. S20 is an important implementation of the present disclosure, through which the process of the target application may be used to execute the functional data packet of the present disclosure, so as to intercept the access request of the target application and disguise the sensitive information to be accessed, and ultimately protect the security of the sensitive information of the user. S20 specifically includes the following steps.

In S201, the process of the target application is hijacked.

Since the control permission on the process of the target application has been acquired before this step, any operation can be performed on the target application. Hijacking the process of the target application occurs in a procedure of generating the process of the target application, and is used for preventing an access intention of the target application at the first time. The Ptrace function may be used to hijack the process of the target application, so as to suspend the process and perform S202.

In S202, a code for calling the dlopen function is injected into the process of the target application.

In this step, a small segment of code injected by the Ptrace function is an assembly code, which contains a call manner of the dlopen function and a loading path of the dynamic link library. The assembly code is short, occupies less memory and is high in execution speed, and thus can complete the calling of the dynamic link library more simple and rapidly.

In S203, the preset dynamic link library is acquired by calling the dlopen function.

In this step, the preset dynamic link library is acquired when there exists the process under the target application. The process of the target application calls the dlopen function by executing the injected assembly code while informing the dlopen function of the loading path of the dynamic link library.

In S204, the dynamic link library is loaded into the process of the target application.

In this step, the dynamic link library is loaded into the process of the target application, so that the function in the dynamic link library can be executed by the process of the target application. The dlopen function loads the dynamic link library into the process of the target application by the acquired loading path of the dynamic link library, and opens a specified dynamic link library file in a specified pattern. Since the function in the dynamic link library file is executed in the process of the target application, the function in the dynamic link library file can modify any memory of a space of the process of the target application, and certainly, a hook may be added as well so as to change a working mechanism of the process of the target application.

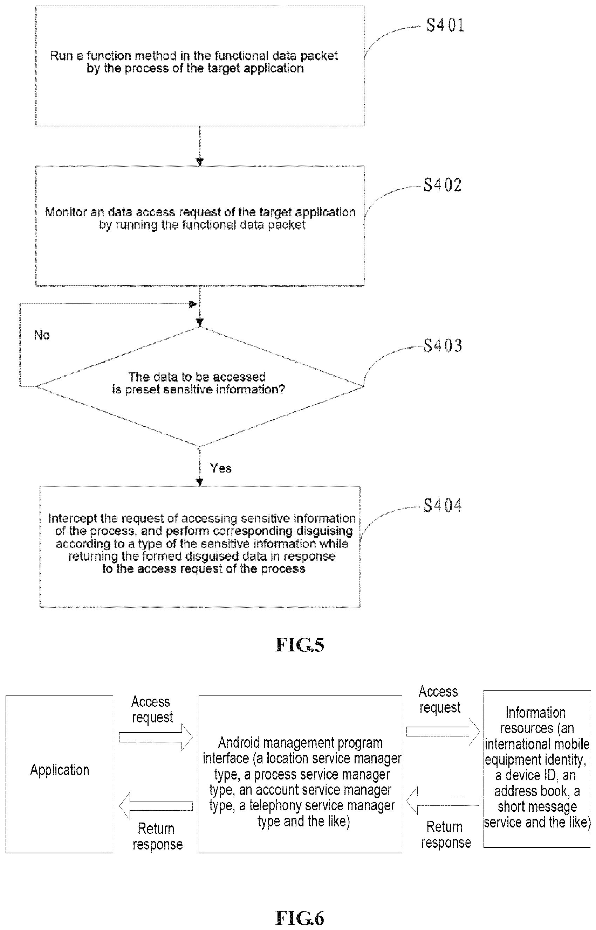

Alternatively, with reference to FIG. 5, and FIG. 5 is a schematic flow diagram showing sensitive information disguising of a sensitive information security protection method of the present disclosure.

In S40, the functional data packet is run to disguise the sensitive information to be accessed by the target application, so as to form disguised data to be acquired by the target application. Thus, S40 specifically further includes the following steps.

In S401, the process of the target application (also referred as a target application process) runs the function method in the functional data packet by executing the function in the dynamic link library. The dynamic link library provides a static call method that allows the process to call a function that does not belong to an executable code of the process. The static call method of the dynamic link library loads the functional data packet into the process of the target application and encapsulates the functional data packet.

In S402, a data access request of the target application is monitored by running the functional data packet. In S403, it is determined whether the data access request of the target application is a request for the preset sensitive information. If it is, S404 is carried out, otherwise S403 is continued. In S404, the functional data packet intercepts the process of the target application and performs corresponding disguising according to the type of the sensitive information to be accessed while returning the generated disguised data in response to the access request of the application process.

The process of the target application runs the functional data packet that has been loaded into the process, the functional data packet monitors the process of the target application and determines whether the data access request of the target application has an intention of accessing the sensitive information. If the data access request of the target application has an intention of accessing the sensitive information, an Android management service program interface intercepts the data access request of the target application, performs targeted data disguising according to the type of the sensitive information accessed by it to form the disguised data, and returns the disguised data in response to the data access request of the target application. If the data access request of the target application does not have an intention of accessing the sensitive information, the data access request of the target application is continuously monitored.

Specifically, with reference to FIG. 6, and FIG. 6 is a diagram showing an example of accessing sensitive information resources by an application in the Android system.

In the Android system, the access to system resources by the application is managed by various management service program interfaces. According to different types of the system resources, the management service program interfaces of the Android system include a location service management type (LocationManager), a process service management type (ProcessManager), an account service manager type (AccountManger), a telephony service manager type (TelephonyManager) and the like.

Under normal circumstances, firstly, the application will send an access request information to the management service program interface, and the management service program interface will confirm whether the application has an access permission on corresponding sensitive information after receiving the access request information sent by the application. If the application has the access permission on corresponding sensitive information, the management service program interface will send an access request to the sensitive information resource, and the sensitive information resource returns the relevant sensitive information to the management service program interface after receiving the access request. Finally, the management service program interface returns the sensitive information to be accessed by the application to the application.

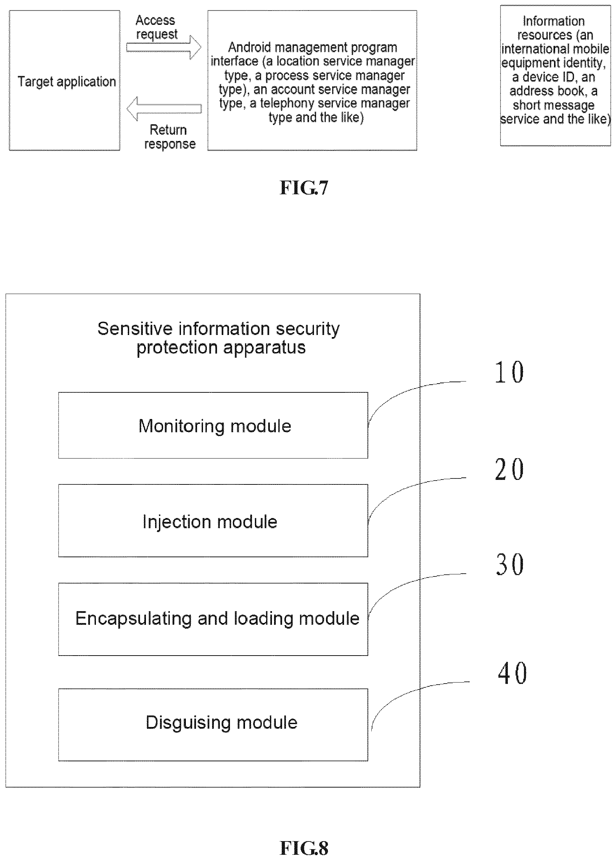

Specifically, with reference to FIG. 7, and FIG. 7 is a schematic diagram of accessing sensitive information resources by a target application program in an Android system according to the present disclosure.

As can be seen from FIG. 7, the only difference between accessing the sensitive information resources by the target application according to the present disclosure and accessing the sensitive information resources by the application under normal circumstances lies in: the access request of the target application is intervened in the present disclosure, thus a communication of accessing the sensitive information by the target application only occurs between the application and the management service interface. Therefore, it is guaranteed fundamentally that the application cannot access the sensitive information. Meanwhile, in order to prevent the application from obtaining no return value and generating a program exception when accessing the sensitive information or prevent from being anti-monitored by the application, there is a need for disguising the sensitive information to be accessed by the application, and returning the generated disguised data to the application. Accordingly, the application is prevented from obtaining no return value and generating the program exception when accessing the sensitive information or being anti-monitored by the application on one hand, and the sensitive information is prevented from being leaked on the other hand.

The sensitive data information in the smart terminal described in the embodiments of the disclosure is mainly classified into two types: the first type is sensitive information related to the terminal equipment per se, for example, an international mobile equipment identity (referred to as IMEI) and a device identification number object (device id); and the second type is sensitive information related to an Android system database (Content Provider database), for example, a location information object (location) and an address book information object (contacts). In the present disclosure, the definition and the setting of the sensitive data information in the smart terminal can be predefined and set by the user. For example, if the user has set a security protection for the sensitive information with respect to a certain application, meanwhile, merely wants to obtain real data information of a certain piece of sensitive information or one type of sensitive information, he or she can obtain the real data information of this piece of sensitive information or this type of sensitive information after presetting.

For example, if the target application wants to acquire the first type of sensitive information such as IMEI or device id, it is necessary for the target application to declare a permission on acquiring the first type of sensitive information of a mobile phone in a manifest.xml file of the Android system. If the target application wants to acquire the second type of sensitive information such as the location information or address book information, it is also necessary for the target application to declare that a permission on acquiring the second type of sensitive information of the mobile phone in the manifest.xml file of the Android system. Therefore, an intention of the data access request of the target application is determined by the permission declaration of the target application in the manifest.xml file of the Android system. If the access to the sensitive information is involved in the permission declaration, the functional data packet will confirm that the target application wants to access the sensitive information, and the functional data packet needs to intercept the data access request of the target application at this moment.

When the target application wants to access the sensitive information, the functional data packet will call the management service program interface in the Android system to intercept the access request of the target application while disguising the sensitive information to be accessed by the target application, and then returns the generated disguised data in response to the data access request of the target application, thereby protecting the sensitive information. The present disclosure performs data disguising with respect to each target application accessing the preset sensitive information.

Hereinafter, a disguising flow of two types of sensitive information involved in the present disclosure will be described specifically with an Android mobile phone as the smart terminal.

The first type is sensitive information related to information of the Android mobile phone.

The Android system provides a telephony management service, one function of this service is to read, for example, IMEI information. The telephony management service can be divided into many layers, where a layer involving reading the information of the mobile phone is a Telephony framework layer. A core TelephonyManager type in the Telephony framework layer provides a series of methods for accessing statuses and information related to the communication of the mobile phone. The statuses and the information related to the communication of the mobile phone include a status and information of a subscriber identity module (SIM) of the mobile phone, as well as a status of a telecommunications network and information of a mobile phone user. Related methods of TelephonyManager type are certainly required to acquire the IMEI information. When the application queries the status of the mobile phone through the TelephonyManager (hereinafter referred to as TM), the TM will send this request to a system service to acquire IMEI number. TelephonyManager.java is analyzed, so that a getDeviceld method in the TM can return an IMEI value. This method is defined in an IphoneSubinfo service. The IphoneSubinfo service is a proxy object for registering a system service in the TM. As can be seen from the TelephonyManager.java, the IphoneSubinfo service is obtained in a getSubscriberInfo interface, and a software version, a device ID, a SIM card international mobile equipment identity and other mobile phone information can be obtained through the IphoneSubinfo service. Moreover, as may be seen from a return statement, in a java layer, the IphoneSubinfo service is obtained through a getService method of the ServiceManager, and the getService method can substantially be regarded as a query procedure of Android services. In order to increase the query speed, the getService will query whether the service exists in a scache firstly, each queried service is stored in a cache hash table. If the IphoneSubinfo service is queried for the first time, the IphoneSubinfo service does not exist in the cache hash table, hence this service may be added and registered by other functions; and if the service exists in the cache hash table, the service is directly returned.

Therefore, for such sensitive information related to the mobile phone information, an intercepting function is realized in the present disclosure by modifying an ibinder object of the IphoneSubinfo service type in the query of the sCache. "Return service" in the getService is changed to "return false" by a manner of process injection, that is, the sensitive information such as IMEI of the status of the mobile phone, which is desired to be acquired by the target application, may be changed to null.

The second type is sensitive information related to the Content Provider.

A data sharing function provided to the application by the Content Provider database is provided in the Android system, where the data provided by the application is organized in a table form by the Content Provider database in the mobile phone. The functions provided by the Content Provider database include query (), insert (), update (), delete () and the like. The most used is query (), which is used by the application to query data in the database. According to the present disclosure, the return value of a Cursor in query () is directly set to be null by analyzing query () in the function of the functional data packet, so that it can be ensured that the service queried by the target application cannot return the sensitive information desired by the target application.

In the embodiments of the present disclosure, it is possible to realize disguising on the sensitive information described in the embodiment of the present disclosure provided that relevant processes, types and methods involved throughout the procedure of getting relevant resources (for example, sensitive information) by the target application are found and then return values of these processes, types and methods are modified. Although this method only employs simple data disguising rather than more careful data encapsulation, the data disguising strategy of the method can also be easily extended to a more detailed data encapsulation system if necessary.

An embodiment of the present disclosure further provides a sensitive information security protection apparatus. With reference to FIG. 8, and FIG. 8 is a schematic diagram showing functional modules of a first embodiment of a sensitive information security protection apparatus of the present disclosure.

In the present embodiment, the sensitive information security protection apparatus includes the modules described below.

A monitoring module 10 is arranged to monitor whether there exists a process of a target application in processes.

It is monitored whether there exists the process of the target application in processes of an Android system through the monitoring module 10. If there does not exist the process of the target application in the processes, and the monitoring module 10 keeps monitoring, otherwise, an injection module 20 starts to operate.

The injection module 20 is arranged to inject a preset dynamic link library into the process of the target application when it is monitored that there exists the process of the target application in the processes.

When it is monitored by the monitoring module 10 that there exists the process of the target application in the processes of the system, a Ptrace function in the Android system is called by the injection module 20 to inject the preset dynamic link library into the process of the target application. Firstly, a small segment of code for calling a dlopen function is injected into the process of the target application by the Ptrace function, and then the dlopen function is called to load the dynamic link library, thereby injecting the preset dynamic link library into the process of the target application.

An encapsulating and loading module 30 is arranged to execute the dynamic link library in the process of the target application to encapsulate and load a preset functional data packet.

The dynamic link library has been injected into the process of the target application by the injection module 20, and therefore, in the encapsulating and loading module 30, the process of the target application may execute the function in the dynamic link library. The Ptrace function calls a static method in the dynamic link library to encapsulate a function method in the functional data packet, and then loads the preset functional data packet to disguise the sensitive information.

A disguising module 40 is arranged to run the functional data packet to disguise sensitive information to be accessed by the target application, so as to generate disguised data to be acquired by the target application.

The functional data packet has been loaded into the process of the target application by the encapsulating and loading module 30, thus the process of the target application can also execute the function method in the functional data packet. In the disguising module 40, the functional data packet firstly intercepts an access request of the target application and confirms the intention of the target application, that is, determines whether the target application wants to access the preset sensitive information. When it is determined that the access request of the target application is to access the preset sensitive information, the functional data packet will perform corresponding disguising on the sensitive information according to a type of the sensitive information to be accessed by the target application to generate disguised data, and return the disguised data in response to the access request of the target application.

In the present embodiment, it is dynamically monitored by the monitoring module 10 whether there exists the process of the target application in the processes, so as to inject the functional data packet into the process of the target application by loading at the first time before the target application sends the access request, thereby preventing the target application from accessing the sensitive information. When it is monitored by the monitoring module 10 that there exists the process of the target application in the processes, the Ptrace function (system function) is called by the injection module 20 to inject the preset dynamic link library into the process of the target application. Therefore, the process of the target application can execute the dynamic link library. In the encapsulating and loading module 30, the preset functional data packet is encapsulated and loaded by executing the dynamic link library in the process of the target application. In the disguising module 40, the functional data packet is run to disguise the sensitive information to be accessed by the target application to generate the disguised data to be acquired by the target application. Therefore, the target application cannot acquire the correct sensitive information data, thereby protecting the security of the sensitive information of the user.

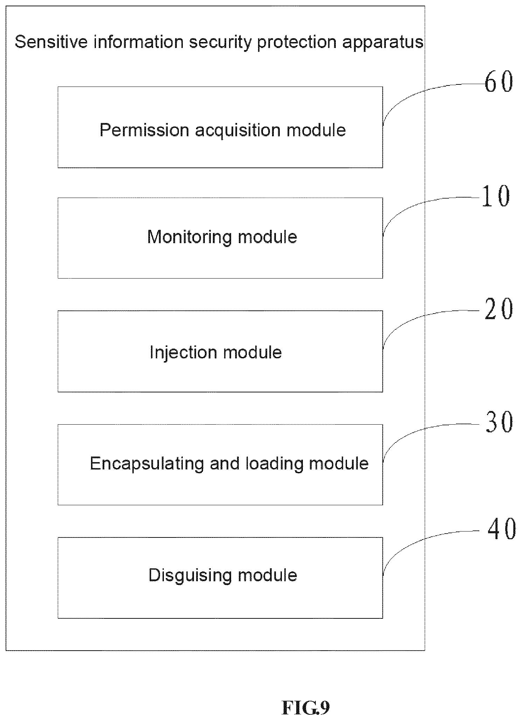

Alternatively, with reference to FIG. 9, and FIG. 9 is a schematic diagram showing functional modules of a second embodiment of a sensitive information security protection apparatus of the present disclosure. Based on the above first embodiment of sensitive information security protection apparatus of the present disclosure, the sensitive information security protection apparatus of the present embodiment further includes:
a permission acquisition module 60, arranged to acquire a control permission on a started target application so as to monitor the target application.

In the Android system, a user identity is assigned to each application when the application is started, and the user identity is used to manage a permission on the application. If the applications are required to be mutually called, they should have the same user identity, and each application cannot casually obtain data of other applications. When the application is started and assigned the user identity in the Android system, the Ptrace function is called by the permission acquisition module 60 to intercept and modify the user identity of the application, so as to acquire the control permission on the application and dynamic monitor the process of the target application through the control permission.

In the present embodiment, the user identity of the target application is modified by the permission acquisition module 60 to acquire the control permission on the target application, and then the target application is dynamically monitored by the monitoring module 10. As a result, it is guaranteed that the target application will not access the sensitive information in the case that the target application is not monitored and a sensitive information protection measure is implemented, and the target application can be dynamically prevented from acquiring the sensitive information in real time. When it is monitored by the monitoring module 10 that there exists the process of the target application in the processes, the system function (Ptrace function) is called by the injection module 20 to inject the preset dynamic link library into the process of the target application. In the encapsulating and loading module 30, the preset functional data packet is encapsulated and loaded by executing the dynamic link library in the process of the target application. In the disguising module 40, the functional data packet is run to disguise the sensitive information to be accessed by the target application to generate disguised data to be acquired by the target application. Therefore, the target application will not acquire correct sensitive information data, thereby protecting the security of the sensitive information of the user.

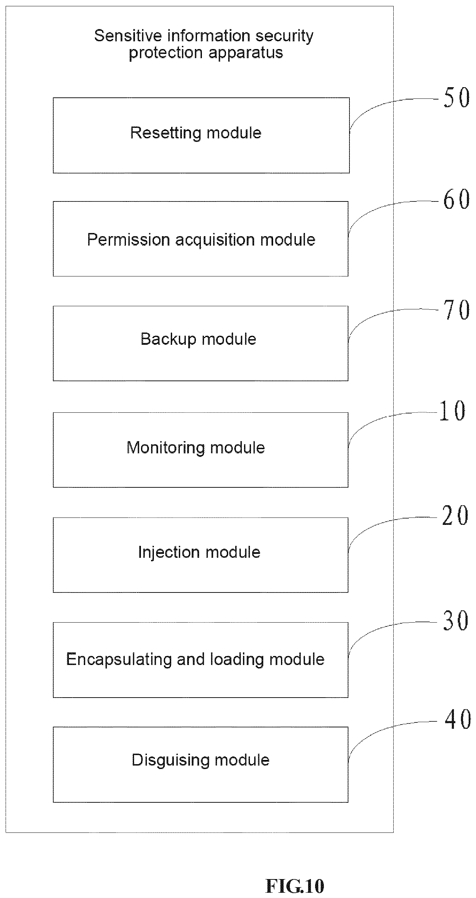

Alternatively, with reference to FIG. 10, and FIG. 10 is a schematic diagram showing functional modules of a third embodiment of a sensitive information security protection apparatus of the present disclosure. In the present embodiment, based on the second embodiment of the above sensitive information security protection apparatus of the present disclosure, the sensitive information security protection apparatus of the present embodiment further includes the modules described below.

A resetting module 50 is arranged to reset a user identity of the target application in a procedure of starting the target application.

In the Android system, each application will be assigned a user identity by the system in the starting procedure, for managing the permission on the application. In order to acquire the control of the target application, it is required to reset the user identity of the target application. In the procedure of starting the target application, the user identity of the target application is reset by the resetting module 50, so as to obtain the control permission on the target application.

A backup module 70 is arranged to backup a file system path of the target application to a preset isolation region to protect the data of the target application.

In the present embodiment, when the target application selected by the user is started, the resetting module 50 will call the Ptrace function to track the starting procedure of the target application and reset the user identity assigned to the target application by the system, so as to acquire the control permission on the target application. Meanwhile, in the present disclosure, the data of the target application is also taken as a protected object, and the file system path of the target application is backuped to the preset isolation region by the backup module 70, thereby preventing other applications from accessing the data of the target application.

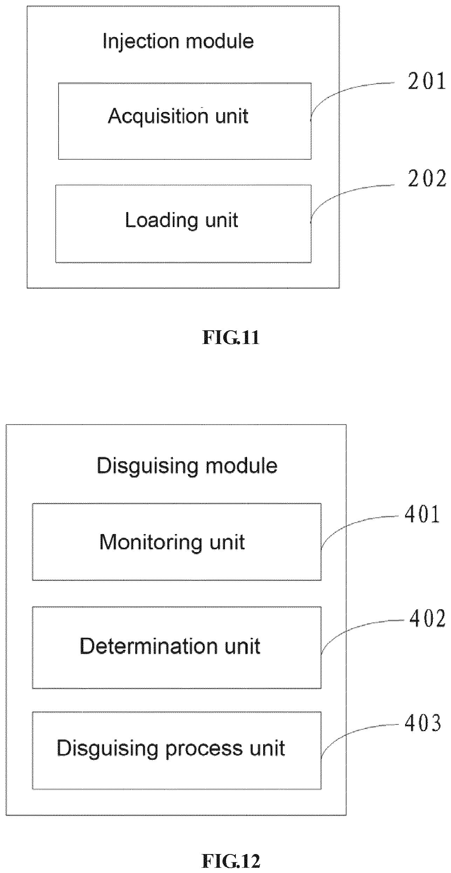

Alternatively, with reference to FIG. 11, and FIG. 11 is a schematic diagram showing functional modules of the injection module of the sensitive information security apparatus according to embodiments of the present disclosure.

Alternatively, the injection module 20 includes the units described below.

An acquisition unit 201 is arranged to acquire a preset dynamic link library when there exists a process under the target application.

After the control permission on the process of the target application is acquired by the permission acquisition module 60, the injection module 70 can perform any operation on the target application. The acquisition unit 201 calls the Ptrace function to hijack the process of the target application so that the process is suspended, and then the Ptrace function injects a small segment of code being an assembly language code into the process of the target application, where the small segment of code includes a calling manner of the dlopen function and a loading path of the dynamic link library. The acquisition unit 201 executes the injected assembly code by the process of the target application to acquire the relevant information of the dynamic link library.

A loading unit 202 is arranged to load the dynamic link library into the process of the target application so that a function in the dynamic link library is executed by the process of the target application.

The loading unit 202, by calling the dlopen function, loads the dynamic link library into the process of the target application through the acquired loading path of the dynamic link library.

In the injection module 20, the acquisition unit 201 injects a segment of assembly code information into the process of the target application by calling the Ptrace function and executes the injected assembly code by the process of the target application, thereby acquiring the relevant information of the dynamic link library. The loading unit 202 loads the dynamic link library by calling the dlopen function, and the dlopen function loads the dynamic link library into the process of the target application through the acquired loading path of the dynamic link library, and a specified dynamic link library file is opened in a specified pattern for execution by the process of the target application.

Alternatively, with reference to FIG. 12, and FIG. 12 is a schematic diagram showing functional modules of a disguising module of a sensitive information security protection apparatus according to an embodiment of the present disclosure.

Alternatively, the disguising module 40 includes the units described below.

A monitoring unit 401 is arranged to run the functional data packet by executing the function in the dynamic link library through the process of the target application, so as to monitor a data access request of the target application.

In the monitoring unit 401, the function in the functional data packet can be executed by the process of the target application, so that the functional data packet can monitor the data access request of the target application. The data access request of the target application can be dynamically learned by the monitoring unit 401 in real time, and thus a sensitive data access request can be intercepted before being sent by the target application.

A determination unit 402 is arranged to intercept the data access request of the target application and determine whether the data to be accessed by the data access request of the target application program is preset sensitive information.

When the monitoring unit 401 monitors that the data access request is sent by the target application, the interception and determination unit 402 intercepts the data access request of the target application and determines whether the intercepted data access request of the target application is a request of accessing the preset sensitive information. If the data access request of the target application is a request of accessing the preset sensitive information, the disguising unit 403 is followed. Otherwise, the interception of the data access request of the target application is terminated.

A disguising process unit 403 is arranged to, through the functional data packet, disguise the sensitive information to be accessed by the application and generate disguised data.

When the interception and determination unit 402 intercepts and determines that the target application has an intention to access the sensitive information, the disguising process unit 403 starts to operate. The disguising process unit 403 disguises the sensitive information to be accessed by the target application according to the type of the sensitive information to be accessed by the target application, and returns the formed disguised data in response to the access request of the target application.

In the disguising module 40, the monitoring unit 401 monitors the data access request of the target application to realize real-time dynamic monitoring of the data access request of the target application. When the monitoring unit 401 monitors that the target application has the data access request, the interception and determination unit 402 intercepts the data access request of the target application and determines whether the data access request of the target application program is a request of accessing the preset sensitive information. If the data access request of the target application program is a request of accessing the preset sensitive information, the disguising process unit 403 performs corresponding disguising process on the sensitive information to be accessed by the target application according to the type of the sensitive information to be accessed by the target application, and returns the formed disguised data in response to the data access request of the target application. Otherwise, the monitoring unit 401 continues to monitor the data access request of the target application.

The foregoing is merely illustrative of a preferred embodiment of the present disclosure and is not intended to limit the scope of the present disclosure, and either equivalent structures or equivalent flow transformations made by using contents of the specification and the accompanying drawings of the present disclosure or directly or indirectly applied in other related technical fields are included within the scope of patent protection of the present disclosure in a similar way.

## Claims

1. A sensitive information security protection method, comprising:
monitoring whether there exists a process of a target application in processes;
injecting a preset dynamic link library into the process of the target application when it is monitored that there exists the process of the target application in the processes;
executing the dynamic link library in the process of the target application to encapsulate and load a preset functional data packet; and
running the functional data packet to disguise sensitive information to be accessed by the target application so as to generate disguised data to be acquired by the target application.

2. The sensitive information security protection method according to claim 1, further comprising the following step before monitoring whether there exists a process of a target application in processes:
acquiring a control permission on a started target application so as to monitor the target application.

3. The sensitive information security protection method according to claim 2, wherein the step of injecting a preset dynamic link library into the process of the application when it is monitored that there exists the process under the target application, comprises:
acquiring the preset dynamic link library when there exists the process under the target application; and
loading the dynamic link library into the process of the target application so that a function in the dynamic link library is executed by the process of the target application.

4. The sensitive information security protection method according to claim 3, wherein the step of running the functional data packet to disguise sensitive information to be accessed by the target application so as to generate disguised data comprises:
running the functional data packet by executing the function in the dynamic link library through the process of the target application, so as to monitor a data access request of the target application; and
performing corresponding disguising process according to a type of the sensitive information to generate disguised data when data to be accessed by the data access request of the target application is preset sensitive information.

5. The sensitive information security protection method according to any one of claims 1 to 4, further comprising:
resetting a user identity of the target application in a procedure of starting the target application; and
backuping a file system path of the target application to a preset isolation region through the reset user identity so as to protect data of the target application.

6. A sensitive information security protection apparatus, comprising:
a monitoring module, arranged to monitor whether there exists a process of a target application in processes;
an injection module, arranged to inject a preset dynamic link library into the process of the target application when it is monitored that there exists the process of the target application in the processes;
an encapsulating and loading module, arranged to execute the dynamic link library in the process of the target application to encapsulate and load a preset functional data packet; and
a disguising module, arranged to run the functional data packet to disguise sensitive information to be accessed by the target application, so as to generate disguised data to be acquired by the target application.

7. The sensitive information security protection apparatus according to claim 6, further comprising:
a permission acquisition module, arranged to acquire a control permission on a started target application so as to monitor the target application.

8. The sensitive information security protection apparatus according to claim 7, wherein the injection module comprises:
an acquisition unit, arranged to acquire the preset dynamic link library when there exists the process under the target application; and
a loading unit, arranged to load the dynamic link library into the process of the target application so that a function in the dynamic link library is executed by the process of the target application.

9. The sensitive information security protection apparatus according to claim 8, wherein the disguising module comprises:
a monitoring unit, arranged to run the functional data packet by executing the function in the dynamic link library through the process of the target application, so as to monitor a data access request of the target application; and
a disguising process unit, arranged to, when data to be accessed by the data access request of the target application is preset sensitive information, perform corresponding disguising process according to a type of the sensitive information to generate disguised data.

10. The sensitive information security protection apparatus according to any one of claims 6 to 9, further comprising:
a resetting module, arranged to reset a user identity of the target application in a procedure of starting the target application; and
a backup module, arranged to backup a file system path of the target application to a preset isolation region through the reset user identity to protect data of the target application.
